# EUROPÄISCHE PATENTSCHRIFT

(11) **EP 2 869 976 B1**
(45) Veröffentlichungstag und Bekanntmachung des Hinweises auf die Patenterteilung: **22.02.2017**
(21) Anmeldenummer: 13728343.8
(22) Anmeldetag: 29.05.2013
(51) Int. Cl.: B27C 5/10, B25F 5/00, B24B 23/02

(54) **SPINDELARRETIERUNGSVORRICHTUNG**
SPINDLE LOCKING DEVICE
DISPOSITIF D'ARRÊT DE BROCHE

(30) Priorität: 04.07.2012 DE 102012211628
(43) Veröffentlichungstag der Anmeldung: 13.05.2015
(73) Patentinhaber: Robert Bosch GmbH, 70442 Stuttgart (DE)
(72) Erfinder: SCHNELL, Pascal, CH-4252 Baerschwil (CH); SIMM, Robert, CH-4566 Oekingen (CH); BANNWART, Thomas, CH-4537 Wiedlisbach (CH)
(86) Internationale Anmeldenummer: PCT/EP2013/061000
(87) Internationale Veröffentlichungsnummer: WO 2014/005768

(56) Entgegenhaltungen:
- EP-A1- 0 982 103
- US-A- 2 897 302
- US-A- 5 191 968
- US-A1- 2008 014 844
- US-A1- 2011 107 892

## Beschreibung

### Stand der Technik

Es sind bereits Spindelarretierungsvorrichtungen für tragbare Werkzeugmaschinen bekannt, die eine Arretiereinheit aufweisen, die ein beweglich gelagertes Arretierelement zu einem Arretieren einer Spindel in eine Richtung umfasst und die ein Bedienelement zu einer Betätigung des Arretierelements umfasst.

### Offenbarung der Erfindung

Die Erfindung geht aus von einer Spindelarretierungsvorrichtung gemäß dem Oberbegriff des Anspruchs 1 für eine tragbare Werkzeugmaschine, mit zumindest einer Arretiereinheit, die zumindest ein beweglich gelagertes Arretierelement zu einem Arretieren einer Spindel in zumindest eine Richtung umfasst und die zumindest ein Bedienelement zu einer Betätigung des Arretierelements umfasst. Eine derartige Spindelarretierungsvorrichtung geht beispielsweise aus der US 2 897 302 A hervor.

Die Erfindung wird durch die Merkmale des Patentanspruchs 1 definiert. Es wird vorgeschlagen, dass die Spindelarretierungsvorrichtung zumindest eine Bewegungsaktivierungseinheit aufweist, die das Arretierelement zumindest in einer unbetätigten Position des Bedienelements in Richtung einer Arretierposition des Arretierelements vorspannt. Die Bewegungsaktivierungseinheit spannt das Arretierelement zumindest in einer unbetätigten Position des Bedienelements in Richtung einer Arretierposition des Arretierelements vor und gibt infolge einer Betätigung des Bedienelements eine selbsttätige Bewegung des Arretierelements in Richtung der Arretierposition frei. Unter einer "Arretiereinheit" soll hier insbesondere eine Einheit verstanden werden, die mittels einer formschlüssigen und/oder einer kraftschlüssigen Verbindung zwischen zumindest einem Element und einem weiteren, beweglich gelagerten Element eine Bewegung des weiteren Elements in zumindest eine Richtung verhindert. Bevorzugt ist die Arretiereinheit als Formschlussarretiereinheit ausgebildet. Somit ist das Arretierelement bevorzugt als Formschlussarretierelement ausgebildet. Es ist jedoch auch denkbar, dass die Arretiereinheit eine andere, einem Fachmann als sinnvoll erscheinende Ausgestaltung aufweist, wie beispielsweise eine Ausgestaltung als Kraftschlussarretiereinheit usw. Die Arretiereinheit ist vorzugsweise dazu vorgesehen, die Spindel der tragbaren Werkzeugmaschine zu einem Werkzeugwechsel zu arretieren. Unter "vorgesehen" soll insbesondere speziell programmiert, speziell ausgelegt und/oder speziell ausgestattet verstanden werden.

Der Begriff "Bedienelement" soll insbesondere ein Element definieren, das dazu vorgesehen ist, bei einem Bedienvorgang eine Eingabegröße von einem Bediener aufzunehmen und insbesondere unmittelbar von einem Bediener kontaktiert zu werden, wobei ein Berühren des Bedienelements sensiert und/oder eine auf das Bedienelement ausgeübte Betätigungskraft sensiert und/oder mechanisch zur Betätigung einer Einheit und/oder eines Elements, insbesondere des Anschlagelements, weitergeleitet wird. Das Arretierelement wird durch das Bedienelement lediglich in eine Freigabeposition des Arretierelements bewegt. In die Arretierposition des Arretierelements wird das Arretierelement mittels der Bewegungsaktivierungseinheit bewegt.

Der Ausdruck "unbetätigte Position des Bedienelements" soll hier insbesondere eine Position des Bedienelements definieren, in der keine Betätigungskraft von einem Bediener auf das Bedienelement ausgeübt wird, insbesondere keine Betätigungskraft zu einer Bewegung des Arretierelements in die Arretierposition des Arretierelements. Der Begriff "Arretierposition" soll hier insbesondere eine Position des Arretierelements definieren, in der die Spindel durch das Arretierelement gegen eine Bewegung in zumindest eine Richtung arretiert ist. Mittels der erfindungsgemäßen Ausgestaltung der Spindelarretierungsvorrichtung kann vorteilhaft eine selbsttätige Bewegung des Arretierelements nach einer Aktivierung der Arretiereinheit erfolgen. Somit kann vorteilhaft eine komfortabel zu bedienende Spindelarretierungsvorrichtung erreicht werden.

In einer bevorzugten Ausgestaltung der erfindungsgemäßen Spindelarretierungsvorrichtung umfasst die Bewegungsaktivierungseinheit zumindest ein Federelement, das das Arretierelement mit einer Federkraft in Richtung der Arretierposition des Arretierelements beaufschlagt. Unter einem "Federelement" soll insbesondere ein makroskopisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Besonders bevorzugt ist das Federelement als Schraubendruckfeder ausgebildet. Es ist jedoch auch denkbar, dass das Federelement eine andere, einem Fachmann als sinnvoll erscheinende Ausgestaltung aufweist, wie beispielsweise eine Ausgestaltung als Schraubenzugfeder, als Tellerfeder, als Evolutfeder usw. Mittels der erfindungsgemäßen Ausgestaltung der Spindelarretierungsvorrichtung kann vorteilhaft eine konstruktiv einfache Vorspannung des Arretierelements in die Arretierposition erreicht werden. Ferner kann vorteilhaft eine kostengünstige Spindelarretierungsvorrichtung realisiert werden.

Des Weiteren wird vorgeschlagen, dass die Bewegungsaktivierungseinheit zumindest ein Halteelement umfasst, das das Bedienelement in zumindest einer betätigten Position des Bedienelements hält. Der Ausdruck "betätigte Position des Bedienelements" soll hier insbesondere eine Position des Bedienelements definieren, in der sich das Bedienelement nach einer Einwirkung einer Betätigungskraft von einem Bediener zu einer Aktivierung einer Bewegungsmöglichkeit des Arretierelements und/oder zu einer Bewegung des Arretierelements befindet.

Besonders bevorzugt ist das Halteelement als Formschlusshalteelement ausgebildet. Es ist jedoch auch denkbar, dass das Halteelement eine andere, einem Fachmann als sinnvoll erscheinende Ausgestaltung aufweist, wie beispielsweise eine Ausgestaltung als Kraftschlusshalteelement usw. Ferner ist es denkbar, dass die Bewegungsaktivierungseinheit alternativ oder zusätzlich zum Halteelement zumindest ein Anschlagelement aufweist, das eine Bewegungsstrecke des Bedienelements begrenzt. Hierbei könnte das Anschlagelement vorzugsweise an das Bedienelement angeformt sein, das zu einer Begrenzung einer Bewegungsstrecke des Bedienelements mit einem Werkzeugmaschinengehäuse der tragbaren Werkzeugmaschine zusammenwirkt. Mittels der erfindungsgemäßen Ausgestaltung der Spindelarretierungsvorrichtung kann vorteilhaft ein hoher Bedienkomfort für einen Bediener erreicht werden, da der Bediener beispielsweise für einen Werkzeugwechsel bei arretierter bzw. blockierter Spindel infolge eines Haltens des Bedienelements durch das Halteelement beide Hände für den Werkzeugwechsel verwenden kann.

Besonders bevorzugt weist das Bedienelement zumindest ein mit einem Halteelement der Bewegungsaktivierungseinheit korrespondierendes Gegenhalteelement auf, das mittels eines Zusammenwirkens mit dem Halteelement das Bedienelement in zumindest einer betätigten Position des Bedienelements hält. Vorzugsweise weist das Bedienelement zumindest ein als Halteausnehmung ausgebildetes Gegenhalteelement auf, in das das Halteelement der Bewegungsaktivierungseinheit in zumindest einer Position des Bedienelements eingreift. Es ist jedoch auch denkbar, dass das Bedienelement einen Rastfortsatz aufweist, der in zumindest einer Position des Bedienelements in ein als Ausnehmung ausgebildetes Halteelement eingreift. Weitere, einem Fachmann als sinnvoll erscheinende Ausgestaltungen des Halteelements und/oder des Gegenhalteelements sind ebenfalls denkbar. Mittels der erfindungsgemäßen Ausgestaltung der Spindelarretierungsvorrichtung kann konstruktiv einfach ein Halten des Bedienelements in zumindest einer Position realisiert werden.

Ferner wird vorgeschlagen, dass die Bewegungsaktivierungseinheit zumindest das Halteelement umfasst, das als federbelasteter Rastbolzen ausgebildet ist. Es ist jedoch auch denkbar, dass das Halteelement als federbelastete Kugel ausgebildet ist, die zu einem Halten des Bedienelements in zumindest einer Position in eine Ausnehmung des Bedienelements eingreift. Es kann vorteilhaft ein zuverlässiges Halten des Bedienelements in zumindest einer betätigten Position des Bedienelements erreicht werden. Ferner kann vorteilhaft einfach mittels eines Überrastens des Rastbolzens eine durch eine von einem Bediener ausgeübte Betätigungskraft hervorgerufene Bewegung des Bedienelements zumindest aus der betätigten Position des Bedienelements erfolgen.

Zudem wird vorgeschlagen, dass die Bewegungsaktivierungseinheit einen Betätigungsfortsatz aufweist, der das Arretierelement zumindest in einer Freigabeposition des Arretierelements hält. Der Begriff "Freigabeposition" soll hier insbesondere eine Position des Arretierelements definieren, in der das Arretierelement beabstandet zur Spindel angeordnet ist und insbesondere eine Bewegungsmöglichkeit der Spindel in zumindest eine Richtung nicht arretiert. Der Betätigungsfortsatz ist bevorzugt einstückig mit dem Bedienelement ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Es ist jedoch auch denkbar, dass der Betätigungsfortsatz von einem formschlüssig und/oder kraftschlüssig mit dem Bedienelement verbundenen Stift gebildet wird. Mittels der erfindungsgemäßen Ausgestaltung kann vorteilhaft eine unbeabsichtigte Bewegung des Arretierelements in die Arretierposition vermieden werden.

Des Weiteren wird vorgeschlagen, dass der Betätigungsfortsatz exzentrisch zu einer Bewegungsachse des Bedienelements am Bedienelement angeordnet ist. Somit kann vorteilhaft ein Hebelprinzip genutzt werden, um das Arretierelement in der Freigabeposition des Arretierelements zu halten.

Ferner wird vorgeschlagen, dass das Bedienelement schwenkbar gelagert ist. Das Bedienelement ist insbesondere entlang eines Winkelbereichs größer als 20°, bevorzugt größer als 90° und besonders bevorzugt größer als 120° um eine Bewegungsachse des Bedienelements schwenkbar gelagert. Besonders bevorzugt verläuft die Bewegungsachse des Bedienelements hierbei zumindest im Wesentlichen parallel zu einer Rotationsachse der Spindel. Somit kann vorzugsweise eine kompakte Anordnung des Bedienelements bzw. der Spindelarretierungsvorrichtung im Bereich der Spindel erreicht werden.

Zudem wird vorgeschlagen, dass das Arretierelement zumindest eine Arretierausnehmung aufweist, die dazu vorgesehen ist, mittels einer formschlüssigen Verbindung die Spindel in zumindest eine Richtung gegen eine Bewegung zu arretieren. Es ist jedoch auch denkbar, dass das Arretierelement einen Arretierfortsatz aufweist, der zu einer Arretierung der Spindel in eine an der Spindel angeordnete Ausnehmung eingreifen kann. Es kann konstruktiv einfach eine zuverlässige Arretierung der Spindel in der Arretierposition des Arretierelements erreicht werden.

Ferner geht die Erfindung aus von einer tragbaren Werkzeugmaschine mit einer erfindungsgemäßen Spindelarretierungsvorrichtung. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Besonders bevorzugt ist die tragbare Werkzeugmaschine als Oberfräse ausgebildet. Es ist jedoch auch denkbar, dass die tragbare Werkzeugmaschine eine andere, einem Fachmann als sinnvoll erscheinende Ausgestaltung aufweist, wie beispielsweise eine Ausgestaltung als Tauchsäge usw. Es kann vorteilhaft ein komfortabler Werkzeugwechsel ermöglicht werden, wodurch ein hoher Bedienkomfort für einen Bediener der tragbaren Werkzeugmaschine erreicht werden kann.

Die erfindungsgemäße Spindelarretierungsvorrichtung und/oder die erfindungsgemäße tragbare Werkzeugmaschine soll/sollen hierbei nicht auf die oben beschriebene Anwendung und Ausführungsform beschränkt sein. Insbesondere kann/können die erfindungsgemäße Spindelarretierungsvorrichtung und/oder die erfindungsgemäße tragbare Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße tragbare Werkzeugmaschine mit einer erfindungsgemäßen Spindelarretierungsvorrichtung in einer schematischen Darstellung,
- Fig. 2: eine Detailansicht der erfindungsgemäßen Spindelarretierungsvorrichtung mit einem in einer unbetätigten Position befindlichen Bedienelement einer Arretiereinheit der Spindelarretierungsvorrichtung in einer schematischen Darstellung,
- Fig. 3: eine Detailansicht der erfindungsgemäßen Spindelarretierungsvorrichtung in einem von einem Werkzeugmaschinengehäuse der erfindungsgemäßen tragbaren Werkzeugmaschine demontierten Zustand mit dem in einer unbetätigten Position befindlichen Bedienelement in einer schematischen Darstellung,
- Fig. 4: eine weitere Detailansicht der erfindungsgemäßen Spindelarretierungsvorrichtung in einem vom Werkzeugmaschinengehäuse demontierten Zustand mit dem in einer unbetätigten Position befindlichen Bedienelement in einer schematischen Darstellung,
- Fig. 5: eine Detailansicht der erfindungsgemäßen Spindelarretierungsvorrichtung mit dem in einer betätigten Position befindlichen Bedienelement in einer schematischen Darstellung,
- Fig. 6: eine Detailansicht der erfindungsgemäßen Spindelarretierungsvorrichtung in einem vom Werkzeugmaschinengehäuse der erfindungsgemäßen tragbaren Werkzeugmaschine demontierten Zustand mit dem in einer betätigten Position befindlichen Bedienelement in einer schematischen Darstellung und
- Fig. 7: eine weitere Detailansicht der erfindungsgemäßen Spindelarretierungsvorrichtung in einem vom Werkzeugmaschinengehäuse der erfindungsgemäßen tragbaren Werkzeugmaschine demontierten Zustand mit dem in einer betätigten Position befindlichen Bedienelement in einer schematischen Darstellung.

### Beschreibung des Ausführungsbeispiels

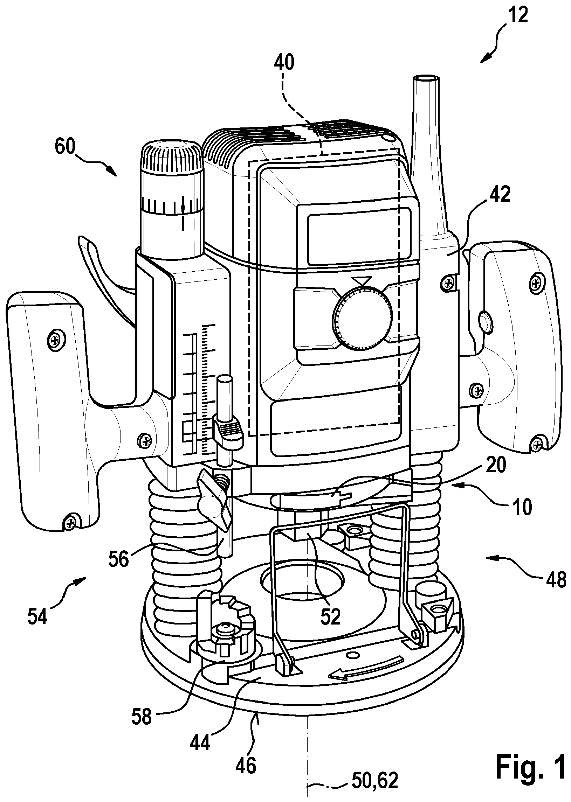

Figur 1 zeigt eine als Oberfräse ausgebildete tragbare Werkzeugmaschine 12, die eine Antriebseinheit 40 zu einem Antrieb eines Einsatzwerkzeugs (hier nicht näher dargestellt) und ein Werkzeugmaschinengehäuse 42, in dem die Antriebseinheit 40 angeordnet ist, umfasst. Die Antriebseinheit 40 ist als Elektromotor ausgebildet, der dazu vorgesehen ist, eine Spindel 18 der tragbaren Werkzeugmaschine 12 rotierend um eine Rotationsachse 62 anzutreiben. An der Spindel 18 ist hierbei eine Werkzeugaufnahme 52 zu einer Aufnahme des Einsatzwerkzeugs drehfest angeordnet. Die Werkzeugaufnahme 52 ist als Spannzange ausgebildet, die dazu vorgesehen ist, das Einsatzwerkzeug zu einer Bearbeitung eines Werkstücks aufzunehmen. Ferner umfasst die tragbare Werkzeugmaschine 12 eine Auflageeinheit 44, die zumindest eine Auflagefläche 46 zu einer Auflage auf einem zu bearbeitenden Werkstück aufweist. Des Weiteren umfasst die tragbare Werkzeugmaschine 12 eine Führungseinheit 48, mittels deren das Werkzeugmaschinengehäuse 42 relativ zur Auflageeinheit 44 beweglich gelagert ist. Hierbei ist das Werkzeugmaschinengehäuse 42 entlang einer Hubachse 50 der tragbaren Werkzeugmaschine 12 relativ zur Auflageeinheit 44 linear beweglich gelagert.

Zudem umfasst die tragbare Werkzeugmaschine 12 eine Frästiefengrobeinstelleinheit 54, die zumindest ein Bewegungsbegrenzungselement 56 zu einer Einstellung einer Länge einer Bewegungsstrecke des Werkzeugmaschinengehäuses 42 relativ zur Auflageeinheit 44 aufweist. Das Bewegungsbegrenzungselement 56 ist zumindest im Wesentlichen parallel zur Hubachse 50 verschiebbar angeordnet. Hierbei ist das Bewegungsbegrenzungselement 56 mittels einer Klemmschraube der Frästiefengrobeinstelleinheit 54 auf eine, einem Fachmann bereits bekannte Art und Weise arretierbar. Ferner umfasst die Frästiefengrobeinstelleinheit 54 einen an einer dem Werkzeugmaschinengehäuse 42 zugewandten Seite der Auflageeinheit 44 drehbar angeordneten Revolveranschlag 58, der in bekannter Weise Anschlagelemente aufweist, die als Anschlag des Bewegungsbegrenzungselements 56 bei einer Bewegung des Werkzeugmaschinengehäuses 42 in Richtung der Auflageeinheit 44 vorgesehen sind. Des Weiteren weist die tragbare Werkzeugmaschine 12 eine Frästiefenfeineinstelleinheit 60 zu einer Feineinstellung einer Schnitttiefe der tragbaren Werkzeugmaschine 12 bzw. des Einsatzwerkzeugs auf. Die als Oberfräse ausgebildete tragbare Werkzeugmaschine 12 weist somit zumindest im Wesentlichen eine, einem Fachmann bereits bekannte Ausgestaltung auf.

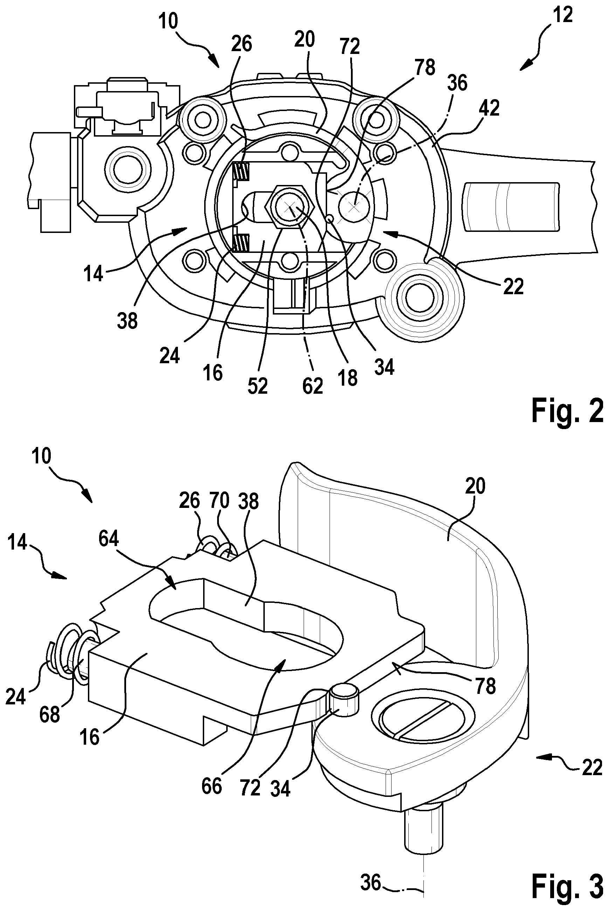

Des Weiteren weist die tragbare Werkzeugmaschine 12 zumindest eine Spindelarretierungsvorrichtung 10 auf. Die Spindelarretierungsvorrichtung 10 ist auf einer der Auflageeinheit 44 zugewandten Seite des Werkzeugmaschinengehäuses 42 am Werkzeugmaschinengehäuse 42 angeordnet (Figur 2). Es ist jedoch auch denkbar, dass die Spindelarretierungsvorrichtung 10 an einer anderen, einem Fachmann als sinnvoll erscheinenden Position am Werkzeugmaschinengehäuse 42 angeordnet ist, wie beispielsweise auf einer der Auflageeinheit 44 abgewandten Seite des Werkzeugmaschinengehäuses 42. Die Spindelarretierungsvorrichtung 10 für die tragbare Werkzeugmaschine 12 umfasst zumindest eine Arretiereinheit 14, die zumindest ein beweglich gelagertes Arretierelement 16 zu einem Arretieren der Spindel 18 in zumindest eine Richtung aufweist und die zumindest ein Bedienelement 20 zu einer Betätigung des Arretierelements 16 aufweist. Ferner weist die Spindelarretierungsvorrichtung 10 zumindest eine Bewegungsaktivierungseinheit 22 auf, die das Arretierelement 16 zumindest in einer unbetätigten Position des Bedienelements 20 in Richtung einer Arretierposition des Arretierelements 16 vorspannt. Hierzu umfasst die Bewegungsaktivierungseinheit 22 zumindest ein Federelement 24, das das Arretierelement 16 mit einer Federkraft in Richtung der Arretierposition des Arretierelements 16 beaufschlagt. Eine Längsachse des Federelements 24 verläuft hierbei zumindest im Wesentlichen quer zur Rotationsachse 62 der Spindel 18. Das Federelement 24 stützt sich mit einem Ende am Werkzeugmaschinengehäuse 42 ab und mit einem weiteren Ende stützt sich das Federelement 24 am Arretierelement 16 ab. Das Arretierelement 16 weist zu einer Führung des Federelements 24 einen Führungsfortsatz 68 auf. Hierbei ist das Federelement 24 mit dem weiteren Ende auf dem Führungsfortsatz 68 angeordnet. Es ist jedoch auch denkbar, dass das Arretierelement 16 entkoppelt von dem Führungsfortsatz 68 ausgebildet ist und sich das Federelement 24 direkt an einer Außenfläche des Arretierelements 16 abstützt. In einer Freigabeposition des Arretierelements 16 ist das Federelement 24 zu einer Vorspannung des Arretierelements 16 in Richtung der Arretierposition des Arretierelements 16 komprimiert (Figuren 2 bis 4).

Ferner weist die Bewegungsaktivierungseinheit 22 zumindest ein weiteres Federelement 26 auf, das das Arretierelement 16 mit einer Federkraft in Richtung der Arretierposition des Arretierelements 16 beaufschlagt. Eine Längsachse des weiteren Federelements 26 verläuft zumindest im Wesentlichen quer zur Rotationsachse 62 der Spindel 18. Die Längsachse des Federelements 24 und die Längsachse des weiteren Federelements 26 verlaufen zumindest im Wesentlichen parallel. Das weitere Federelement 26 stützt sich mit einem Ende am Werkzeugmaschinengehäuse 42 ab und mit einem weiteren Ende stützt sich das weitere Federelement 26 am Arretierelement 16 ab. Das Arretierelement 16 weist zu einer Führung des weiteren Federelements 26 einen weiteren Führungsfortsatz 70 auf. Hierbei ist das weitere Federelement 26 mit dem weiteren Ende auf dem weiteren Führungsfortsatz 70 angeordnet. In einer Freigabeposition des Arretierelements 16 ist das weitere Federelement 26 zu einer Vorspannung des Arretierelements 16 in Richtung der Arretierposition des Arretierelements 16 komprimiert (Figuren 2 bis 4).

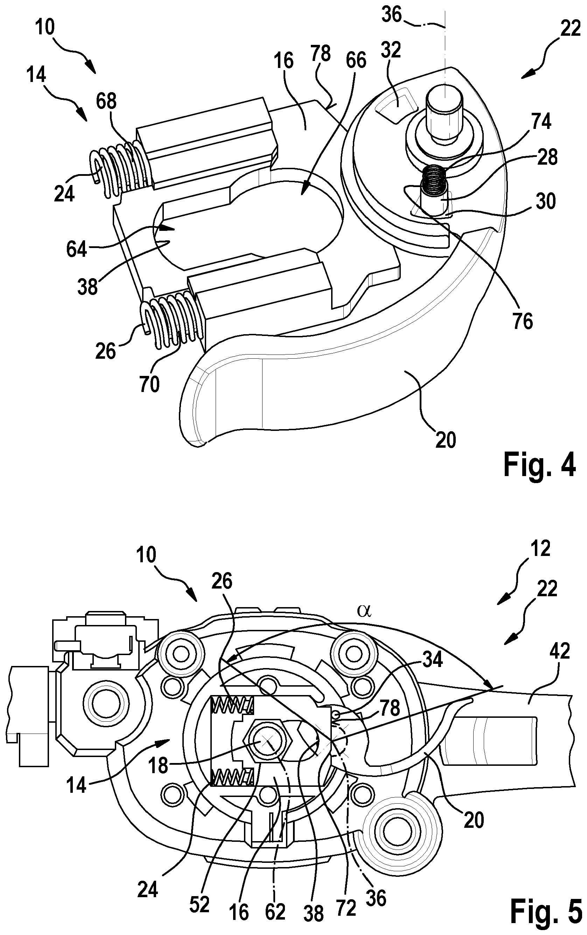

In der Arretierposition arretiert das Arretierelement 16 die Spindel 18 mittels einer formschlüssigen Verbindung gegen eine Drehbewegung um die Rotationsachse 62 der Spindel 18 (Figur 5). Hierzu weist das Arretierelement 16 zumindest eine Arretierausnehmung 38 auf, die dazu vorgesehen ist, mittels einer formschlüssigen Verbindung die Spindel 18 in zumindest eine Richtung gegen eine Bewegung zu arretieren. Die Arretierausnehmung 38 weist hierbei einen Arretierbereich 64 auf, der eine zu einer Außenform der Spindel 18 korrespondierende Ausgestaltung aufweist (Figuren 3, 4, 6 und 7). Hierbei weist das Arretierelement 16 zumindest zwei zumindest im Wesentlichen parallel und geradlinig verlaufende Arretierrandbereiche auf, die den Arretierbereich 64 der Arretierausnehmung 38 begrenzen. Die zwei zumindest im Wesentlichen parallel und geradlinig verlaufenden Arretierrandbereiche wirken zu einer Arretierung der Spindel 18 formschlüssig mit zwei zumindest im Wesentlichen parallel verlaufenden Arretierflächen der Spindel 18 zusammen. Ferner weist die Arretierausnehmung 38 einen Freigabebereich 66 auf, der im Vergleich zum Arretierbereich 64 eine größere Innenabmessung aufweist als eine Innenabmessung des Arretierbereichs 64 (Figuren 3, 4, 6 und 7). Der Freigabebereich 66 der Arretierausnehmung 38 weist eine kreissegmentartige Ausgestaltung auf, die eine freie Rotationsbewegung der Spindel 18 um die Rotationsachse 62 der Spindel 18 innerhalb des Freigabebereichs 66 der Arretierausnehmung 38 ermöglicht. Hierzu weist der Freigabebereich 66 der Arretierausnehmung 38 im Vergleich zur Spindel 18 eine größere Innenabmessung auf als eine Außenabmessung der Spindel 18. Der Arretierbereich 64 und der Freigabebereich 66 der Arretierausnehmung 38 sind direkt aneinander angrenzend am Arretierelement 16 angeordnet.

Die Bewegungsaktivierungseinheit 22 weist einen Betätigungsfortsatz 34 auf, der das Arretierelement 16 zumindest in der Freigabeposition des Arretierelements 16 hält. Hierbei ist der Betätigungsfortsatz 34 dazu vorgesehen, das Arretierelement 16 gegen eine Wirkung von Federkräften des Federelements 24 und des weiteren Federelements 26 in der Freigabeposition des Arretierelements 16 zu halten. Der Betätigungsfortsatz 34 wirkt zu einem Halten des Arretierelements 16 in der Freigabeposition des Arretierelements 16 mit einer Steuerausnehmung 72 des Arretierelements 16 zusammen. Hierbei greift der Betätigungsfortsatz 34 in der Freigabeposition des Arretierelements 16 in die Steuerausnehmung 72 des Arretierelements 16 ein. Es ist jedoch auch denkbar, dass das Arretierelement 16 entkoppelt von der Steuerausnehmung 72 ausgebildet ist und der Betätigungsfortsatz 34 in zumindest einem Zustand direkt an einer Außenfläche 78 des Arretierelements 16 anliegt. Der Betätigungsfortsatz 34 ist exzentrisch zu einer Bewegungsachse 36 des Bedienelements 20 am Bedienelement 20 angeordnet. Hierbei ist der Betätigungsfortsatz 34 einstückig mit dem Bedienelement 20 ausgebildet. Das Bedienelement 20 ist schwenkbar um die Bewegungsachse 36 des Bedienelements 20 gelagert. Hierbei ist das Bedienelement 20 als Bedienhebel ausgebildet, der schwenkbar am Werkzeugmaschinengehäuse 42 gelagert ist. Die Bewegungsachse 36 des Bedienelements 20 verläuft zumindest im Wesentlichen parallel zur Rotationsachse 62 der Spindel 18. Das Bedienelement 20 ist entlang eines Winkelbereichs α, der größer ist als 120°, relativ zum Werkzeugmaschinengehäuse 42 schwenkbar um die Bewegungsachse 36 des Bedienelements 20 am Werkzeugmaschinengehäuse 42 gelagert (Figur 5). Es ist jedoch auch denkbar, dass das Bedienelement 20 entlang eines von 120° verschiedenen Winkelbereichs α oder eines Winkelbereichs α, der gleich 120° ist, relativ zum Werkzeugmaschinengehäuse 42 schwenkbar um die Bewegungsachse 36 des Bedienelements 20 am Werkzeugmaschinengehäuse 42 gelagert ist.

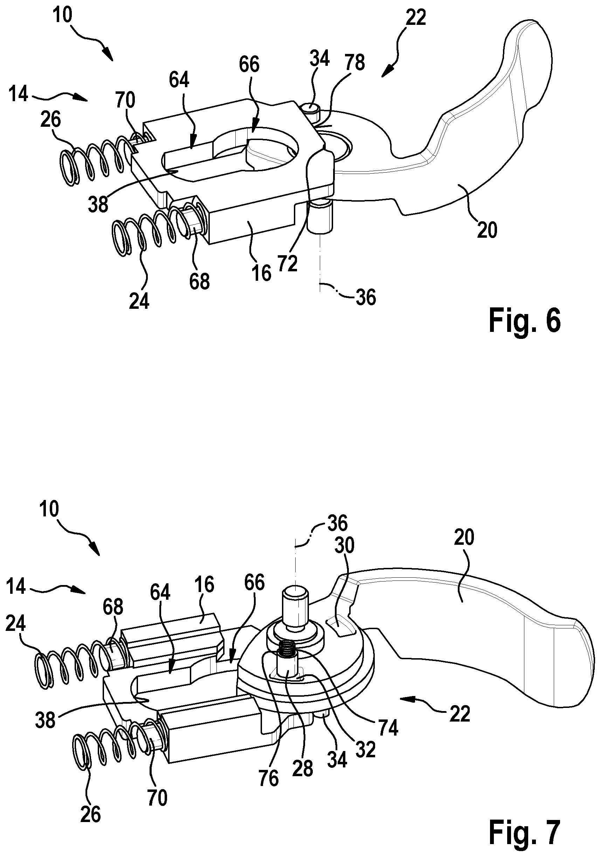

Des Weiteren umfasst die Bewegungsaktivierungseinheit 22 zumindest ein Halteelement 28, das das Bedienelement 20 in zumindest einer betätigten Position des Bedienelements 20 hält. Das Halteelement 28 ist als federbelasteter Rastbolzen ausgebildet. Somit umfasst die Bewegungsaktivierungseinheit 22 zumindest das Halteelement 28, das als federbelasteter Rastbolzen ausgebildet ist. Die Bewegungsaktivierungseinheit 22 umfasst zu einer Beaufschlagung des Halteelements 28 mit einer Kraft in Richtung des Bedienelements 20 zumindest ein Rastbolzenfederelement 74 (Figuren 4 und 7). Das Rastbolzenfederelement 74 ist als Schraubendruckfeder ausgebildet. Eine Längsachse des Rastbolzenfederelements 74 verläuft zumindest im Wesentlichen parallel zur Rotationsachse 62 der Spindel 18. Zu einer Ausübung einer Kraft auf das Halteelement 28 stützt sich das Rastbolzenfederelement 74 mit einem Ende am Werkzeugmaschinengehäuse 42 ab und mit einem weiteren Ende stützt sich das Rastbolzenfederelement 74 am Halteelement 28 ab. Zu einer Aufnahme des Rastbolzenfederelements 74 weist das Halteelement 28 eine Federaufnahme 76 auf, in der das Rastbolzenfederelement 74 zumindest teilweise angeordnet ist.

Das Bedienelement 20 weist zumindest ein mit einem Halteelement 28 der Bewegungsaktivierungseinheit 22 korrespondierendes Gegenhalteelement 30 auf, das mittels eines Zusammenwirkens mit dem Halteelement 28 das Bedienelement 20 in zumindest einer betätigten Position des Bedienelements 20 hält. Hierbei greift ein Rastkopf des als Rastbolzen ausgebildeten Halteelements 28 in der betätigten Position des Bedienelements 20 bzw. nach einem Schwenken des Bedienelements 20 entlang des Winkelbereichs α um mehr als 120° relativ zum Werkzeugmaschinengehäuse 42 um die Bewegungsachse 36 des Bedienelements 20 in das als Aufnahmeausnehmung ausgebildete Gegenhalteelement 30 ein. Hierdurch wird das Bedienelement 20 mittels einer formschlüssigen Verbindung in der betätigten Position gehalten. In der betätigten Position des Bedienelements 20 ist das Arretierelement 16 in Abhängigkeit von einer Ausrichtung der Spindel 18 relativ zum Arretierbereich 64 der Arretierausnehmung 38 infolge von Federkräften des Federelements 24 und des weiteren Federelements 26 in die Arretierposition des Arretierelements 16 bewegbar.

Ferner umfasst das Bedienelement 20 zumindest ein weiteres mit einem Halteelement 28 der Bewegungsaktivierungseinheit 22 korrespondierendes Gegenhalteelement 32, das mittels eines Zusammenwirkens mit dem Halteelement 28 das Bedienelement 20 in zumindest einer unbetätigten Position des Bedienelements 20 hält. Hierbei greift der Rastkopf des als Rastbolzen ausgebildeten Halteelements 28 in der unbetätigten Position des Bedienelements 20 in das weitere als Aufnahmeausnehmung ausgebildete Gegenhalteelement 32 ein. Hierdurch wird das Bedienelement 20 mittels einer formschlüssigen Verbindung in der unbetätigten Position gehalten. In der unbetätigten Position des Bedienelements 20 wird das Arretierelement 16 durch den am Bedienelement 20 einstückig an das Bedienelement 20 angeformten Betätigungsfortsatz 34 an einer Bewegung infolge von Federkräften des Federelements 24 und des weiteren Federelements 26 in die Arretierposition des Arretierelements 16 gehindert. Das Gegenhalteelement 30 und das weitere Gegenhalteelement 32 sind entlang einer um die Bewegungsachse 36 des Bedienelements 20 verlaufenden Umfangsrichtung relativ zueinander beabstandet am Bedienelement 20 angeordnet (Figuren 4 und 7).

Zu einer Arretierung der Spindel 18 gegen eine Drehbewegung der Spindel 18 um die Rotationsachse 62 der Spindel 18 betätigt ein Bediener das Bedienelement 20: Hierbei schwenkt der Bediener das Bedienelement 20 ausgehend von der unbetätigten Position des Bedienelements 20 um die Bewegungsachse 36 des Bedienelements 20 in die betätigte Position des Bedienelements 20. Der Betätigungsfortsatz 34 gleitet infolge einer Schwenkbewegung des Bedienelements 20 um die Bewegungsachse 36 des Bedienelements 20 aus der Steuerausnehmung 72 des Arretierelements 16 heraus und auf der Außenfläche 78 des Arretierelements 16. Hierdurch wird eine Beweglichkeit des Arretierelements 16 in Richtung der Arretierposition des Arretierelements 16 bzw. in Richtung der Spindel 18 infolge von Federkräften des Federelements 24 und des weiteren Federelements 26 freigegeben. Die Außenfläche 78 ist hierbei an einer dem Führungsfortsatz 68 und dem weiteren Führungsfortsatz 70 abgewandten Seite des Arretierelements 16 am Arretierelement 16 angeordnet. Zudem ist die Außenfläche 78 direkt angrenzend an die Steuerausnehmung 72 am Arretierelement 16 angeordnet.

Das Bedienelement 20 wird mittels eines Zusammenwirkens des Halteelements 28 und des Gegenhalteelements 30 in der betätigten Position des Bedienelements 20 gehalten. Sobald die Arretierflächen der Spindel 18 mit den zwei zumindest im Wesentlichen parallel und geradlinig verlaufenden Arretierrandbereichen des Arretierelements 16 fluchten, wird das Arretierelement 16 mittels Federkräften des Federelements 24 und des weiteren Federelements 26 ausgehend von der Freigabeposition des Arretierelements 16 in die Arretierposition des Arretierelements 16 bewegt. Somit ist die Spindel 18 nach einem Erreichen der Arretierposition des Arretierelements 16 mittels einer formschlüssigen Verbindung des Arretierelements 16 und der Spindel 18 gegen eine Drehbewegung um die Rotationsachse 62 der Spindel 18 arretiert.

Zu einer Aufhebung einer Arretierung der Spindel 18 wird das Bedienelement 20 ausgehend von der betätigten Position in die unbetätigte Position des Bedienelements 20 geschwenkt. Hierbei gleitet der Betätigungsfortsatz 34 auf der Außenfläche des Arretierelements 16 in die Steuerausnehmung 72 des Arretierelements 16. Hierdurch wird das Arretierelement 16 ausgehend von der Arretierposition des Arretierelements 16 entgegen Federkräften des Federelements 24 und des weiteren Federelements 26 in die Freigabeposition des Arretierelements 16 bewegt. Zudem rastet das Halteelement 28 in das weitere Gegenhalteelement 32 infolge der Schwenkbewegung des Bedienelements 20 ein. Hierdurch wird das Bedienelement 20 mittels eines Zusammenwirkens des Halteelements 28 und des weiteren Gegenhalteelements 32 in der unbetätigten Position des Bedienelements 20 gehalten. Somit bildet der Betätigungsfortsatz 34 einen Steuernocken der Bewegungsaktivierungseinheit 22. Ferner wird das Arretierelement 16 in der Freigabeposition des Arretierelements 16 durch den Betätigungsfortsatz 34 gegen eine Bewegung in Richtung der Arretierposition des Arretierelements 16 gesichert, bis eine erneute Schwenkbewegung des Bedienelements 20 in Richtung der betätigten Position des Bedienelements 20 erfolgt.

## Patentansprüche

1. Spindelarretierungsvorrichtung für eine tragbare Werkzeugmaschine, mit zumindest einer Arretiereinheit (14), die zumindest ein beweglich gelagertes Arretierelement (16) zu einem Arretieren einer Spindel (18) in zumindest eine Richtung umfasst und die zumindest ein Bedienelement (20) zu einer Betätigung des Arretierelements (16) umfasst, und mit zumindest einer Bewegungsaktivierungseinheit (22), die das Arretierelement (16) zumindest in einer unbetätigten Position des Bedienelements (20) in Richtung einer Arretierposition des Arretierelements (16) vorspannt, **dadurch gekennzeichnet, dass** das Arretierelement (16) durch das Bedienelement (20) lediglich in eine Freigabeposition des Arretierelements (16) bewegt wird derart, dass der Bediener das Bedienelement (20a) ausgehend von der unbetätigten Position des Bedienelements (20a) um eine Bewegungsachse (36a) des Bedienelements (20a) in die betätigte Position des Bedienelements (20a) schwenkt.

2. Spindelarretierungsvorrichtung nach Anspruch 1, **dadurch gekennzeichnet, dass** die Bewegungsaktivierungseinheit (22a) zumindest ein Federelement (24, 26) umfasst, das das Arretierelement (16) mit einer Federkraft in Richtung der Arretierposition des Arretierelements (16) beaufschlagt.

3. Spindelarretierungsvorrichtung nach einem der vorhergehenden Ansprüche, **dadurch gekennzeichnet, dass** die Bewegungsaktivierungseinheit (22) zumindest ein Halteelement (28) umfasst, das das Bedienelement (20) in zumindest einer betätigten Position des Bedienelements (20) hält.

4. Spindelarretierungsvorrichtung nach einem der vorhergehenden Ansprüche, **dadurch gekennzeichnet, dass** das Bedienelement (20) zumindest ein mit einem Halteelement (28) der Bewegungsaktivierungseinheit (22) korrespondierendes Gegenhalteelement (30) aufweist, das mittels eines Zusammenwirkens mit dem Halteelement (28) das Bedienelement (20) in zumindest einer betätigten Position des Bedienelements (20) hält.

5. Spindelarretierungsvorrichtung nach einem der vorhergehenden Ansprüche, **dadurch gekennzeichnet, dass** die Bewegungsaktivierungseinheit (22) zumindest ein Halteelement (28) umfasst, das als federbelasteter Rastbolzen ausgebildet ist.

6. Spindelarretierungsvorrichtung nach einem der vorhergehenden Ansprüche, **dadurch gekennzeichnet, dass** die Bewegungsaktivierungseinheit (22) einen Betätigungsfortsatz (34) aufweist, der das Arretierelement (16) zumindest in einer Freigabeposition des Arretierelements (16) hält.

7. Spindelarretierungsvorrichtung nach Anspruch 6, **dadurch gekennzeichnet, dass** der Betätigungsfortsatz (34) exzentrisch zu einer Bewegungsachse (36) des Bedienelements (20) am Bedienelement (20) angeordnet ist.

8. Spindefarretierungsvorrichtung nach einem der vorhergehenden Ansprüche, **dadurch gekennzeichnet, dass** das Arretierelement (16) zumindest eine Arretierausnehmung (38) aufweist, die dazu vorgesehen ist, mittels einer formschlüssigen Verbindung die Spindel (18) in zumindest eine Richtung gegen eine Bewegung zu arretieren.

9. Tragbare Werkzeugmaschine, insbesondere Oberfräse, mit zumindest einer Spindelarretierungsvorrichtung nach einem der vorhergehenden Ansprüche.

## Claims

1. Spindle locking device for a portable machine tool, having at least one locking unit (14), which comprises at least one movably mounted locking element (16) for locking a spindle (18) in at least one direction and comprises at least one operating element (20) for actuating the locking element (16), and having at least one movement activation unit (22), which pretensions the locking element (16), at least in an unactuated position of the operating element (20), in the direction of a locking position of the locking element (16), **characterized in that** the locking element (16) is moved by the operating element (20) only into a release position of the locking element (16) in such a way that the operator pivots the operating element (20a), starting from the unactuated position of the operating element (20a) about a motional axis (36a) of the operating element (20a) into the actuated position of the operating element (20a).

2. Spindle locking device according to Claim 1, **characterized in that** the movement activation unit (22a) comprises at least one spring element (24, 26), which subjects the locking element (16) to a spring force in the direction of the locking position of the locking element (16).

3. Spindle locking device according to one of the preceding claims, **characterized in that** the movement activation unit (22) comprises at least one holding element (28), which holds the operating element (20) in at least an actuated position of the operating element (20).

4. Spindle locking device according to one of the preceding claims, **characterized in that** the operating element (20) has at least one counterholding element (30), which corresponds with a holding element (28) of the movement activation unit (22) and which, by means of interaction with the holding element (28), holds the operating element (20) in at least an actuated position of the operating element (20).

5. Spindle locking device according to one of the preceding claims, **characterized in that** the movement activation unit (22) comprises at least one holding element (28), which is configured as a spring-loaded latching bolt.

6. Spindle locking device according to one of the preceding claims, **characterized in that** the movement activation unit (22) has an actuating projection (34), which holds the locking element (16) at least in a release position of the locking element (16).

7. Spindle locking device according to Claim 6, **characterized in that** the actuating projection (34) is arranged on the operating element (20) eccentrically to a motional axis (36) of the operating element (20).

8. Spindle locking device according to one of the preceding claims, **characterized in that** the locking element (16) has at least one locking recess (38), which is provided to lock the spindle (18), by means of a positive connection, in at least one direction against movement.

9. Portable machine tool, in particular a router, having a spindle locking device according to one of the preceding claims.

## Revendications

1. Dispositif d'arrêt de broche pour une machine-outil portative, avec au moins une unité d'arrêt (14), qui comprend au moins un élément d'arrêt (16) monté de façon mobile pour un arrêt d'une broche (18) dans au moins un sens et qui comprend au moins un élément de commande (20) pour un actionnement de l'élément d'arrêt (16), et avec au moins une unité d'activation de mouvement (22), qui pousse l'élément d'arrêt (16) en direction d'une position d'arrêt de l'élément d'arrêt (16) au moins dans une position non actionnée de l'élément de commande (20), **caractérisé en ce que** l'élément d'arrêt (16) est déplacé par l'élément de commande (20) uniquement dans une position de libération de l'élément d'arrêt (16), de telle manière que l'opérateur fasse pivoter l'élément de commande (20a) à partir de la position non actionnée de l'élément de commande (20a) à la position actionnée de l'élément de commande (20a) autour d'un axe de mouvement (36a) de l'élément de commande (20a).

2. Dispositif d'arrêt de broche selon la revendication 1, **caractérisé en ce que** l'unité d'activation de mouvement (22a) comprend au moins un élément de ressort (24, 26), qui sollicite l'élément d'arrêt (16) avec une force de ressort en direction de la position d'arrêt de l'élément d'arrêt (16).

3. Dispositif d'arrêt de broche selon l'une quelconque des revendications précédentes, **caractérisé en ce que** l'unité d'activation de mouvement (22) comprend au moins un élément de retenue (28), qui retient l'élément de commande (20) dans au moins une position actionnée de l'élément de commande (20).

4. Dispositif d'arrêt de broche selon l'une quelconque des revendications précédentes, **caractérisé en ce que** l'élément de commande (20) présente au moins un élément de retenue opposé (30) correspondant à un élément de retenue (28) de l'unité d'activation de mouvement (22), qui par une coopération avec l'élément de retenue (28) retient l'élément de commande (20) dans au moins une position actionnée de l'élément de commande (20).

5. Dispositif d'arrêt de broche selon l'une quelconque des revendications précédentes, **caractérisé en ce que** l'unité d'activation de mouvement (22) comprend au moins un élément de retenue (28), qui est réalisé sous la forme d'un boulon d'arrêt à ressort.

6. Dispositif d'arrêt de broche selon l'une quelconque des revendications précédentes, **caractérisé en ce que** l'unité d'activation de mouvement (22) présente un prolongement d'actionnement (34), qui retient l'élément d'arrêt (16) au moins dans une position de libération de l'élément d'arrêt (16).

7. Dispositif d'arrêt de broche selon la revendication 6, **caractérisé en ce que** le prolongement d'actionnement (34) est disposé sur l'élément de commande (20) de façon excentrique par rapport à un axe de mouvement (36) de l'élément de commande (20).

8. Dispositif d'arrêt de broche selon l'une quelconque des revendications précédentes, **caractérisé en ce que** l'élément d'arrêt (16) présente au moins un évidement d'arrêt (38), qui est prévu pour arrêter la broche (18) contre un mouvement dans au moins un sens au moyen d'une liaison par emboîtement.

9. Machine-outil portative, en particulier défonceuse, avec au moins un dispositif d'arrêt de broche selon l'une quelconque des revendications précédentes.
